# EUROPEAN PATENT SPECIFICATION

(11) **EP 1 391 973 B1**
(45) Date of publication and mention of the grant of the patent: **15.12.2004**
(21) Application number: 02360231.1
(22) Date of filing: 05.08.2002
(51) Int. Cl.: H02G 9/06, H02G 1/08, G02B 6/50

(54) **Conduit glue bag, conduit glue strips and methods for installing cable in sewer pipe**
Rohrklebestoffbeutel, Rohrklebestoffstreifen sowie Verfahren zum Installieren von Kabeln in Abwasserrohre
Poche à colle pour conduit, rubans à colle pour conduit ainsi que procédés d'installation de câble dans un égout

(43) Date of publication of application: 25.02.2004
(73) Proprietor: ALCATEL, 75008 Paris (FR)
(72) Inventor: Li, Dr. Hong, 41169 Monchengladbach (DE); Nothofer, Klaus, 40699 Erkrath (DE)
(74) Representative: Dohmen, Johannes Maria Gerardus

(56) References cited:
- EP-A- 0 855 773
- DE-A- 19 816 368
- DE-A- 19 861 090
- DE-A- 19 921 382
- US-A1- 2001 010 781

## Description

### Field of the Invention and Related Art

The invention relates to a conduit glue bag and conduit glue strips which shall be glued to the inner wall of a sewer pipe and methods for installing a cable in said sewer pipe by making use of said conduit glue strips.

Using of sewer pipes or other underground supply conduits for laying communication cables is a possibility already being exploited to lower the costs of underground work for communications subscriber access. It also enables subscriber access of this kind to be extended , which is becoming increasingly important owing to the multiplicity of operators. Some known techniques for laying communication cables in sewer pipes are for example the use of customised robots which pull in and fix the conduits to the sewer wall by means of metal ring clamps; tubular liners which expand and press the cable onto the inner wall of the pipe; or an elongated strip-shaped body which is bonded to the internal surface of a pipe.

In U.S. Pat. Application No. 2001010781 for example, it is disclosed a method for laying data cables in underground pipes which uses an elongated strip body adhered to a portion of the pipe and which has at least one cable confined in such body, the method comprising the steps of confining at least one cable in said body of settable material, inserting the body into the pipe prior to setting of the material of such body, introducing into the pipe a deformable tubular liner, expanding the liner from within to thus urge the body against the internal surface of the pipe, and causing the body to set or bond the body to the internal surface of the pipe. A drawback of such proposal is that the cable shall be laid inside the pipe together with the strip body, and thus the need to repeat the laying process every time new cabling is needed.

Also in German patent application DE 198 16 368, which is considered the closest state of the art, a cable carrier used for laying cables in e.g. drain channels, avoiding obstruction, is disclosed. The cable carrier has a closed construction, with internal cable channels carrying cables, each with a protective tube and strips protect from the sides of the carrier which allow it to be attached to the inner wall of the e.g. drain channel.

### Object of the Invention

The object of the present invention is to provide a conduit glue bag and a conduit glue strip to be glued against a portion of the internal surface of a underground pipe and methods for installing micro optical fiber cable inside said pipes which are low cost and provide easy cable exchange and repair.

The object is achieved according to the invention by a conduit glue bag according to claim 1, a conduit glue strip according to claim 4 and a method for installing a cable in a sewer pipe using a conduit glue strip according to claim 4.

Standard methods for inspection, cleaning and repair of sewer canals can be applied to the installed system. Advantageous configurations of the invention emerge from the dependent claims, the following description and the drawings.

### Brief Description of the Drawings

An embodiment example of the invention is now explained with the aid of Figs. 1 to 3.
Fig. 1 A,B shows an embodiment of a conduit glue bag according to the invention, in cross section and sideways respectively.
Fig. 2 shows the cross-section of an underground pipe with a conduit glue strip according to the invention, made out of a number of conduit glue bags adhered to the inner wall of the pipe.
Fig. 3 shows the cross-section of an underground pipe with a conduit glue strip made out of a strip-shaped body adhered to the inner wall of the pipe.

### Detailed Description of the Drawings

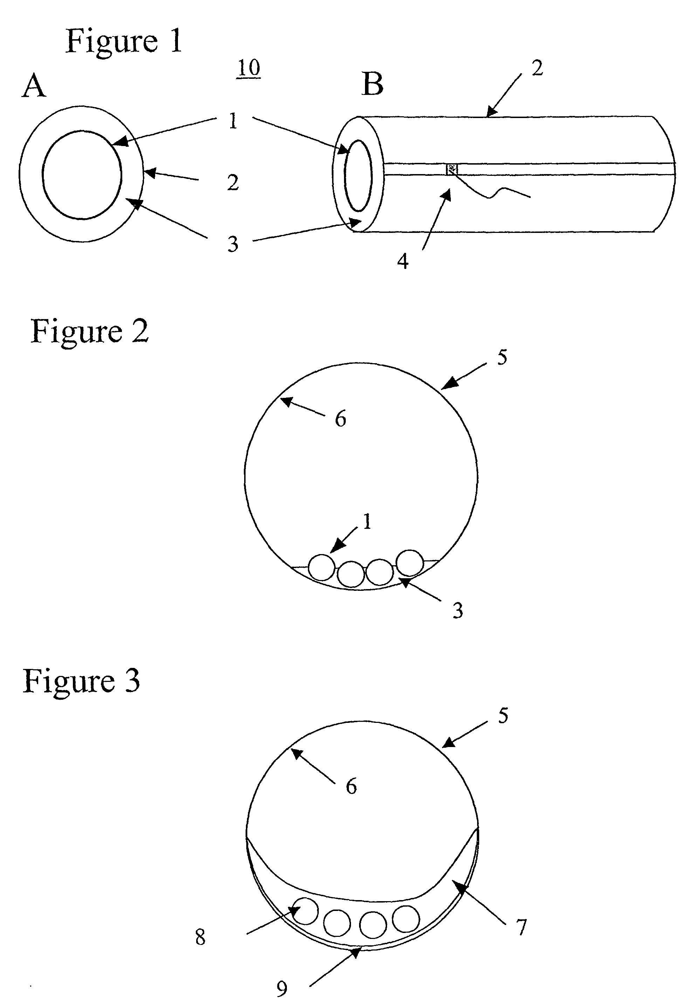

Figure 1 A,B shows an embodiment of a conduit glue bag 10 in cross section and sideways respectively. It is designed as a conduit 1, which has a bag 2 over its exterior surface, the bag 2 being filled with glue fluid 3 and having a zip cord 4 longitudinally along its surface. It is built in such a manner that, after pulling the zip cord 4, the glue fluid 3 will pour out of the bag 2.

The conduit 1 can be made of some plastic material. The bag 2 is made of polyester felt material with inner PE coating and the glue material 3 inside the bag belongs to the acrylate glue family, which is also suitable for wet ground, such as silanmodified glue, or glasfiber epoxy resin and is kept in fluid form.

It is also advantageous to cover more than one conduit 1 with the glue bag 2 or having a conduit 1 divided with spacers or equipped with more inner conduits.

Figure 2 shows the cross-section of an underground pipe 5 with a conduit glue strip glued to the inner surface 6 of said pipe. The conduit glue strip is made out of four conduits 1 adhered to the inner wall 6 of said pipe by means of a glue material 3 which was originally confined inside the bags 2 as already explained above.

After positioning of the conduit glue bag 10 on the desired position inside the pipe 5, preferably at the bottom of said pipe, the zip cord 4 of the bag 2 will be pulled and the glue fluid 3 will pour out of the bag 2 and over the inner surface 6 of the pipe. Simultaneously the conduit glue bag 10 will be pressed to ensure an entire glue 3 contact between the conduits 1 and the wall 6 to increase the cohesive effects. Hot water will be introduced later inside the conduit 1 to activate the glue 3 function and form a cohesive conduit glue strip adhered to the inner wall 6 of the pipe 5.

Once the conduit glue strip is formed, micro optical fiber cable (not shown) can be blown or pulled at any time into the conduit 1.

Figure 3 shows a cross-section of a pipe 5 with a conduit glue strip glued to the inner surface 6 of said pipe. The conduit glue strip comprises an elongated strip body soft material 7 with four canals 8 which extend lengthwise of the pipe 5 and a glue layer 9 in charge of adhering the conduit glue strip.

The soft material 7 is made of polyester felt material with inner PE coating. The glue layer 9 belongs to the acrylate glue family, which is also suitable for wet ground, such as silanmodified glue.

In a state previous to the gluing of the conduit glue strip to the inner wall of the pipe, the conduit glue strip glue layer 9 is protected with thin foil (not shown) or similar protection tape, preventing it from soiling by transport and pulling into the sewer pipes.

Once the conduit glue strip is laid on the desired position inside the pipe 5, preferably at the bottom of said pipe, the protective foil or tape is put off and simultaneously the strip pressed and glued against the inner surface 5 of the pipe 6. Hot water is later introduced into the internal conduit strip canals 8 to activate the glue layer 9 function. Alternatively, hot water can also be used to loose the protection tape.

Once the conduit glue strip is successfully installed, micro optical fiber cable (not shown) can be blown or pulled at any time into the canals 8.

## Claims

1. Conduit glue bag (10) **characterized in that** said bag comprises at least one conduit element (1) and a bag (2) filled with glue fluid (3) which extends over the exterior surface of said at least one conduit (1), said bag (2) having a zip cord (4) along it and being built in such a manner that after pulling the zip cord (4), the glue fluid (3) pours out of the bag (2).

2. Conduit glue bag (10) according to claim 1 **characterized in that** the glue fluid (3) belongs to the acrylate glue family such as elastic silanmodified glue or glassfiber epoxy resin.

3. Conduit glue bag (10) according to claim 1 **characterized in that** the conduit (1) is made of some plastic material and the bag (2) is made of polyester felt with inner PE coating.

4. Conduit glue strip to be glued against a portion of the internal surface (6) of an underground pipe (5), preferably at the bottom of the pipe, **characterized in that** said strip is made out of at least one conduit glue bag (10) according to claim 1.

5. Method for installing a cable in a sewer pipe (5) using a conduit glue strip according to claim 4, **characterized in that** said method comprises the following steps:
introducing at least one conduit glue bag (10) according to claim 1 inside said sewer pipe (5);
pulling the zip cord (4) of the bag (2) to let the glue fluid (3) pour out over the sewer inner surface (6) and simultaneously pressing the conduit glue bag (10) on the installation position;
activating the glue function of the glue fluid (3) by injecting hot water inside the conduit (1);
blowing or pulling into said conduit (1) micro optical fiber cable.

## Patentansprüche

1. Rohrklebestoffbeutel (10), **dadurch gekennzeichnet, dass** der Beutel mindestens ein Rohrelement(1) und einen Beutel (2) besitzt, der mit Klebeflüssigkeit (3) gefüllt ist, und sich über die Außenfläche des Rohres (1) erstreckt, wobei der Beutel (2) entlang seiner Länge eine Art Reißverschluss (4) besitzt, der so konstruiert ist, dass die Klebeflüssigkeit (3) aus dem Beutel (2) herausfließt, wenn an dem Reißverschluss gezogen wird.

2. Rohrklebestoffbeutel (10) nach Anspruch 1, **dadurch gekennzeichnet, dass** es sich bei der Klebeflüssigkeit (3) um die Acrylatklebstoffserie wie einen silanmodifizierten, elastischen Klebstoff oder ein Glasfaser-Epoxydharz handelt.

3. Rohrklebestoffbeutel (10) nach Anspruch 1, **dadurch gekennzeichnet, dass** das Rohr (1) aus einem Kunststoff hergestellt ist, und der Beutel (2) aus einem Polyesterfilz mit PE-Innenbeschichtung besteht.

4. Rohrklebestoffstreifen, der gegen einen Abschnitt der Innenfläche (6) eines unterirdischen Rohres (5) geklebt wird, vorzugsweise an der Rohrunterseite, **dadurch gekennzeichnet, dass** der Rohrklebestoffstreifen aus mindestens einem Rohrklebestoffbeutel (10) gemäß Anspruch 1 besteht.

5. Verfahren zum Installieren von Kabeln in Abwasserrohre (5) unter Verwendung eines Rohrklebestoffstreifens nach Anspruch 4, **dadurch gekennzeichnet, dass** das Verfahren die folgenden Schritte aufweist:
Einführen mindestens eines Rohrklebestoffbeutels (10) nach Anspruch 1 in das Abwasserrohr (5);
Ziehen des Reißverschlusses (4) an dem Beutel (2), so dass sich die Klebstoffflüssigkeit (3) über die Innenfläche (6) des Abwasserrohres ergießt, und gleichzeitiges Drücken mit dem Rohrklebestoffbeutel (10) auf die Installierungsposition;
Aktivieren der Klebefunktion der Klebstoffflüssigkeit (3) durch Einspritzen von Heißwasser in das Rohr (1);
Einblasen oder Einziehen eines Mikro-Glasfaserkabels in das Rohr (1).

## Revendications

1. Enveloppe de conduite de colle (10) **caractérisée en ce que** ladite enveloppe comprend au moins un organe de conduite (1) et une enveloppe (2) remplie d'un fluide collant (3) qui s'étend sur la surface extérieure dudit au moins un organe de conduite (1), ladite enveloppe (2) ayant un cordon à glissière (4) disposé sur sa longueur et étant réalisée de telle sorte qu'après avoir tiré le cordon à glissière. (4), le fluide collant (3) se déverse hors de l'enveloppe (2).

2. Enveloppe de conduite de colle (10) selon la revendication 1 **caractérisée en ce que** le fluide collant (3) appartient à la famille des colles acrylate comme la colle à base de silane-modifié élastique ou la résine époxy avec de la fibre de verre.

3. Enveloppe de conduite de colle (10) selon la revendication 1 **caractérisée en ce que** l'organe de conduite (1) est réalisé en matériaux plastiques et l'enveloppe (2) est réalisée en feutre polyester avec une couche intérieure en polyéthylène.

4. Bande de conduite de colle destinée à être collée contre une portion de la surface intérieure (6) d'un tuyau souterrain (5), de préférence en bas du tuyau, **caractérisé en ce que** ladite bande est constituée d'au moins une enveloppe de conduite de colle (10) selon la revendication 1.

5. Procédé d'installation d'un câble dans un tuyau d'égout (5) utilisant une bande de conduite de colle selon la revendication 4, **caractérisé en ce que** ledit procédé comprend les étapes consistant à:
- introduire au moins une enveloppe de conduite de colle (10) selon la revendication 1 à l'intérieur dudit tuyau d'égout (5) ;
- tirer le cordon à glissière (4) de l'enveloppe (2) pour laisser le fluide collant (3) se déverser sur la surface intérieure du tuyau d'égout (6) et simultanément presser l'enveloppe de conduite de colle (10) sur la position d'installation ;
- activer la fonction de collage du fluide collant (3) en injectant de l'eau chaude à l'intérieur de la conduite (1 ) ;
- glisser ou tirer dans ladite conduite (1) un micro câble de fibre optique.
